# EUROPÄISCHE PATENTANMELDUNG

(11) **EP 4 015 346 A1**
(43) Veröffentlichungstag der Anmeldung: **22.06.2022**
(21) Anmeldenummer: 21190713.4
(22) Anmeldetag: 11.08.2021
(51) Int. Cl.: B62B 3/02, B62B 3/00, B62B 3/18

(54) **ROLLCONTAINER**

(30) Priorität: 21.12.2020 DE 102020134480
(71) Anmelder: Wanzl GmbH & Co. KGaA, 89340 Leipheim (DE)
(72) Erfinder: Mazourek, Marek, 77900 Olomouc (CZ)

(57) **Zusammenfassung**

Die Beschreibung zeigt einen Rollcontainer zum Aufbewahren und/oder zum Transport von Waren, wobei der Rollcontainer umfasst: mindestens eine, insbesondere vier, Seitenwände (12), wobei mindestens eine Seitenwand (12) zum Öffnen ausgebildet ist, und mindestens einen Abstandshalter, wobei der Abstandshalter parallel zu dieser Seitenwand (12) angeordnet ist.

## Beschreibung

Die vorliegende Erfindung betrifft einen Rollcontainer zum Aufbewahren und/oder zum Transport von Waren.

Im Stand der Technik sind Rollcontainer bzw. Rollbehälter bekannt. Beispielsweise zeigt die WO06061150 A2 einen Transportbehälter für gestapelte Waren. Das Dokument EP 1884438 A2 offenbart ein Fahrgestell und einen Aufbau, wobei das Fahrgestell ein Rollgestell mit zwei Lenkrädern aufweist. Die DE 10334214 B3 beschreibt einen fahrbaren Behälter für Kisten mit einem fahrbaren Untersatz. Die EP 3141455 A1 beschreibt einen klappbaren Rollcontainer, wobei der leere Rollcontainer zusammenfaltbar ist. Die EP 0614825 A1 zeigt einen Rollcontainer mit einer waagrechten Verstärkungsleiste, die in Ausnehmungen der Seitenwände einsteckbar ist.

Rollcontainer bzw. Rollbehälter dienen dem Transport von Waren und sollen diese auch gegen Beschädigung schützen. Hierzu sollte der Rollcontainer eine ausreichende mechanische Stabilität aufweisen. Rollcontainer benötigen oftmals keinen Deckel bzw. oberen Abschluss. Andererseits ergibt sich gerade durch einen oberen Abschluss eine erhebliche Erhöhung der mechanischen Stabilität des Rollcontainers.

Ein Rollcontainer soll neben einer hohen mechanischen Stabilität eine leichte Handhabung beim Zusammenklappen aufweisen. Vorteilhafterweise kann der Rollcontainer einhändig zusammengeklappt werden, wodurch auch bei schwierigen Transportverhältnissen, beispielsweise einem beengten Stauraum, eine komfortable Bedienung des Rollcontainers gewährleistet werden kann.

Eine Aufgabe ist daher, einen Rollcontainer bzw. Rollbehälter zur Verfügung zu stellen, sodass der Rollcontainer auch ohne einen Deckel bzw. oberen Abschluss eine hohe mechanische Stabilität aufweist und wobei der Rollcontainer eine einfache Bedienbarkeit beim Zusammenklappen erlaubt.

Als erster Aspekt der Erfindung wird ein Rollcontainer zum Aufbewahren und/oder zum Transport von Waren zur Verfügung gestellt, wobei der Rollcontainer umfasst: mindestens eine, insbesondere vier, Seitenwände, wobei mindestens eine Seitenwand zum Öffnen ausgebildet ist, und mindestens einen Abstandshalter, wobei der Abstandshalter parallel zu dieser Seitenwand angeordnet ist.

Durch einen parallel verlaufenden Abstandshalter zu der zu öffnenden Seitenwand kann die mechanische Stabilität des Rollcontainers auch bei geöffneter Seitenwand erheblich gesteigert werden.

Beispielhafte Ausführungsformen werden in den abhängigen Ansprüchen beschrieben.

Gemäß einer beispielhaften Ausführungsform der Erfindung wird ein Rollcontainer zur Verfügung gestellt, wobei der Abstandshalter an einem ersten Ende und an einem zweiten Ende mit dem Rollcontainer verbunden ist, wobei das erste Ende eine 2-Punkt-Verbindung mit dem Rollcontainer ist und das zweite Ende eine 1-Punkt-Verbindung oder eine 2-Punkt-Verbindung ist.

Mit der Anordnung von zumindest einer 2-Punkt-Verbindung kann die mechanische Stabilität bzw. mechanische Steifigkeit des Rollcontainers erhöht werden.

Gemäß einer beispielhaften Ausführungsform der Erfindung wird ein Rollcontainer zur Verfügung gestellt, wobei die 2-Punkt-Verbindung durch eine Betätigung eines Griffs, wodurch ein Bolzen aus dem Abstandshalter gezogen werden kann, in eine 1-Punkt-Verbindung überführbar ist.

Mit der Anordnung eines Griffs erhöht sich die Benutzerfreundlichkeit insbesondere beim Zusammenklappen des Rollcontainers.

Gemäß einem weiteren Ausführungsbeispiel der vorliegenden Erfindung wird ein Rollcontainer zur Verfügung gestellt, wobei der Abstandshalter um einen Bolzen der 2-Punkt-Verbindung und um einen Bolzen oder eine Schraube der 1-Punkt-Verbindung schwenkbar ist.

Gemäß einem weiteren Ausführungsbeispiel der vorliegenden Erfindung wird ein Rollcontainer zur Verfügung gestellt, wobei die 2-Punkt-Verbindung einen Bolzen 7 aufweist, der in einer Nut des Rollcontainers verfahrbar ist.

Durch die Verschwenkbarkeit des Abstandshalters um die zwei Achsen und durch die Verfahrmöglichkeit einer Achse in einer Nut des Abstandshalters kann der Rollcontainer zusammengeklappt werden, wobei der Abstandshalter mit dem Rollcontainer verbunden bleiben kann und dadurch die mechanische Stabilität des Rollcontainers erhalten bleibt.

In einer weiteren erfindungsgemäßen Ausführungsform wird ein Rollcontainer zur Verfügung gestellt, wobei der Rollcontainer eine Feder aufweist, die einen durch den Griff gezogenen Bolzen in seine Ausgangslage zurückführen kann.

In einer weiteren erfindungsgemäßen Ausführungsform wird ein Rollcontainer zur Verfügung gestellt, wobei der Griff eine Verlängerung aufweist, sodass auch kleine Personen den Griff betätigen können.

Gemäß einer beispielhaften Ausführungsform der Erfindung wird ein Rollcontainer zur Verfügung gestellt, wobei der Abstandshalter in einer Draufsicht parallel zu einer Seitenwand nach innen oder nach außen versetzt angeordnet ist.

Gemäß einer beispielhaften Ausführungsform der Erfindung wird ein Rollcontainer zur Verfügung gestellt, wobei der Abstandshalter in einem Querschnitt einen Winkel aufweist, um die mechanische Stabilität des Abstandshalters zu erhöhen.

Ist der Abstandshalter über zumindest einen Teil seiner Länge abgewinkelt, weist also einen Winkel im Querschnitt auf, so wird ein Verwinden oder Verbiegen des Abstandshaltzers erschwert.

Als eine Idee der Erfindung kann angesehen werden, einen Rollcontainer mit einem Abstandshalter derart zu versehen, dass sich die mechanische Stabilität des betreffenden Rollcontainers erhöhen lässt. Hierbei wird der Abstandshalter parallel zu einer Seite des Rollcontainers angeordnet, sodass sich bezüglich der betreffenden Seite des Rollcontainers ein Rechteck ergibt. Hierdurch erhöht sich die mechanische Versteifung erheblich. Es ist in diesem Fall nicht mehr erforderlich, ein oberes abschließendes Deckelelement auf den Rollcontainer aufzusetzen, um einen Rollcontainer mit hoher mechanischer Stabilität zu erhalten. In einer besonderen erfinderischen Ausführungsform ist der Abstandshalter an den gegenüberliegenden Seiten unterschiedlich befestigt, sodass eine einfache Zusammenklappbarkeit des Rollcontainers gewahrt bleibt.

Außerdem zeichnet sich der erfindungsgemäße Rollcontainer in einer vorteilhaften Ausführungsform dadurch aus, dass er sehr einfach, insbesondere einhändig, zusammengeklappt werden kann. Hierzu weist der Rollcontainer eine Querleiste bzw. Abstandshalter zur Verstärkung auf, der parallel zu einer Seitenwand des Rollcontainers verläuft und nach innen versetzt ist. Hierdurch ergibt sich in einer Draufsicht ein Rechteck. Dieses Rechteck wird zusätzlich dadurch versteift, dass an einem Ende der Querleiste, die Querleiste mit zwei beabstandeten Verbindungspunkten mit dem Rollcontainer verbunden ist. Vorteilhafterweise kann die Querleiste beim Zusammenklappen mit dem Rollcontainer verbunden bleiben. Allerdings wird dann die 2-Punkt-Verbindung an dem einen Ende der Querleiste aufgehoben und in eine 1-Punkt-Verbindung verwandelt, sodass die Querleiste/der Abstandshalter bezüglich dem Rollcontainer verschwenkt werden kann. Hierzu ist zudem vorgesehen, dass die verbleibende Verbindung mit dem Rollcontainer, nämlich ein Bolzen, in einer Nut verfahren werden kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Weitere Einzelheiten und Vorteile der Erfindung werden anhand der in den Zeichnungen dargestellten Ausführungsbeispiele deutlich. Es zeigen
Fig. 1 einen Rollcontainer in einer perspektivischen Ansicht,
Fig. 2 einen Ausschnitt des Rollcontainers, der die 2-Punkt-Verbindung des Abstandshalters 1 mit dem Rollcontainer darstellt,
Fig. 3 einen weiteren Ausschnitt des Rollcontainers, der die 1-Punkt-Verbindung des Abstandshalters 1 mit dem Rollcontainer darstellt,
Fig. 4 den Rollcontainer,
Fig. 5 den Rollcontainer in einer seitlichen Darstellung,
Fig. 6 den Rollcontainer in einer vorderen Darstellung,
Fig. 7 die 2-Punkt-Verbindung des Abstandshalters 1 mit dem Rollcontainer,
Fig. 8 die 1-Punkt-Verbindung des Abstandshalters 1 mit dem Rollcontainer,
Fig. 9 den Rollcontainer in einer perspektivischen Darstellung,
Fig. 10 einen Ausschnitt des Rollcontainers mit der 2-Punkt-Verbindung des Abstandshalters 1 mit dem Rollcontainer,
Fig. 11 den Rollcontainer mit einer geöffneten Seitenwand, wobei der Abstandshalter 1 für eine ausreichende mechanische Stabilität bei geöffneter Seitenwand sorgt,
Fig. 12 den Rollcontainer bei geöffneter Seitenwand und hochgeklapptem Boden, wobei der Abstandshalter 1 auch in diesem Zustand für genügende mechanische Stabilität sorgt,
Fig. 13 die 1-Punkt-Verbindung des Abstandshalters 1 mit dem Rollcontainer,
Fig. 14 die 2-Punkt-Verbindung mit den zwei Bolzen 7 und 8, die an zwei beabstandeten Punkten für eine mechanische Verbindung zwischen dem Abstandshalter 1 und dem Rollcontainer sorgen,
Fig. 15 der Abstandshalter 1 mit der Nut 10,
Fig. 16 eine perspektivische Darstellung des Rollcontainers,
Fig. 17 den Rollcontainer mit dem Abstandshalter 1,
Fig. 17A den Abstandshalter 1,
Fig. 18 die 1-Punkt-Verbindung in einer Explosionsdarstellung,
Fig. 19 die komplett montierte 1-Punkt-Verbindung,
Fig. 20 die 2-Punkt-Verbindung in einer Explosionsdarstellung,
Fig. 21 die 2-Punkt-Verbindung mit der Platte 11, auf der die Feder 5 aufsitzt, wenn der Griff 6 betätigt wird,
Fig. 22 die 2-Punkt-Verbindung,
Fig. 23 die komplett montierte 2-Punkt-Verbindung,
Fig. 24 die 2-Punkt-Verbindung mit dem Sicherungsstift 18, damit die Feder 5 bei Betätigung des Griffs 6 zusammengedrückt wird,
Fig. 25 die 2-Punkt-Verbindung vor der Betätigung des Griffs 6,
Fig. 26 die 2-Punkt-Verbindung nach Betätigung des Griffs 6,
Fig. 27 den Rollcontainer in einer perspektivischen Darstellung mit dem Abstandshalter 1,
Fig. 28 die 2-Punkt-Verbindung,
Fig. 29 den Rollcontainer bei einer geöffneten Seitenwand,
Fig. 30 den erfindungsgemäßen Rollcontainer beim Zusammenklappen einer Seitenwand,
Fig. 31 denselben Rollcontainer und
Fig. 32 denselben Rollcontainer bei vollständig eingeklappter Seitenwand.

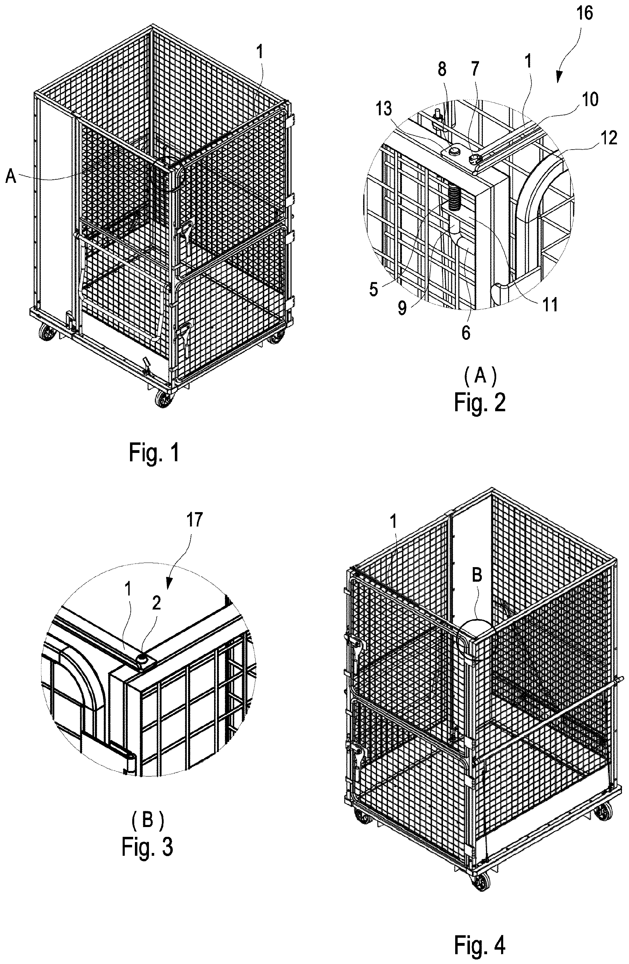

Fig. 1 zeigt einen Rollcontainer/Rollbehälter in einer perspektivischen Darstellung mit einem Abstandshalter 1, um die mechanische Stabilität des Rollcontainers zu erhöhen.

Fig. 2 zeigt einen Ausschnitt des Rollcontainers mit dem Abstandshalter 1, der eine Nut 10 aufweist, in der ein Bolzen 7 verfahren kann, damit der Abstandshalter 1 zu dem Rollcontainer verschwenkt werden kann, wodurch der Rollcontainer zusammengeklappt werden kann. Außerdem ist ein Griff 6 dargestellt, der nach unten gezogen werden kann, wodurch der Bolzen 8 aus dem Abstandshalter 1 gezogen werden kann. In diesem Fall ist die mechanisch steife Verbindung des Abstandshalters 1 mit dem Rollcontainer aufgehoben, denn aus der 2-Punkt-Verbidnung am Ende 13 des Abstandshalters 1 ist eine 1-Punkt-Verbindung geworden. Hierdurch kann der Abstandshalter 1 um den Bolzen 7 bezüglich dem Rollcontainer verschwenkt werden. Außerdem kann sich der Bolzen 7 in der Nut 10 bewegen. Außerdem ist die Platte 11 dargestellt, auf der die Feder 5 aufsitzt. Wird der Griff 6 nach unten gezogen, so wird die Feder 5 durch die Platte 11 zusammengestaucht. Hierdurch ergibt sich eine Rückstellkraft auf den Bolzen 8.

Fig. 3 zeigt einen Ausschnitt eines Bereichs des Rollcontainers, bei dem der Abstandshalter 1 mit dem Rollcontainer eine 1-Punkt-Verbimdung aufweist.

Fig. 4 zeigt den Rollcontainer in einer perspektivischen Darstellung.

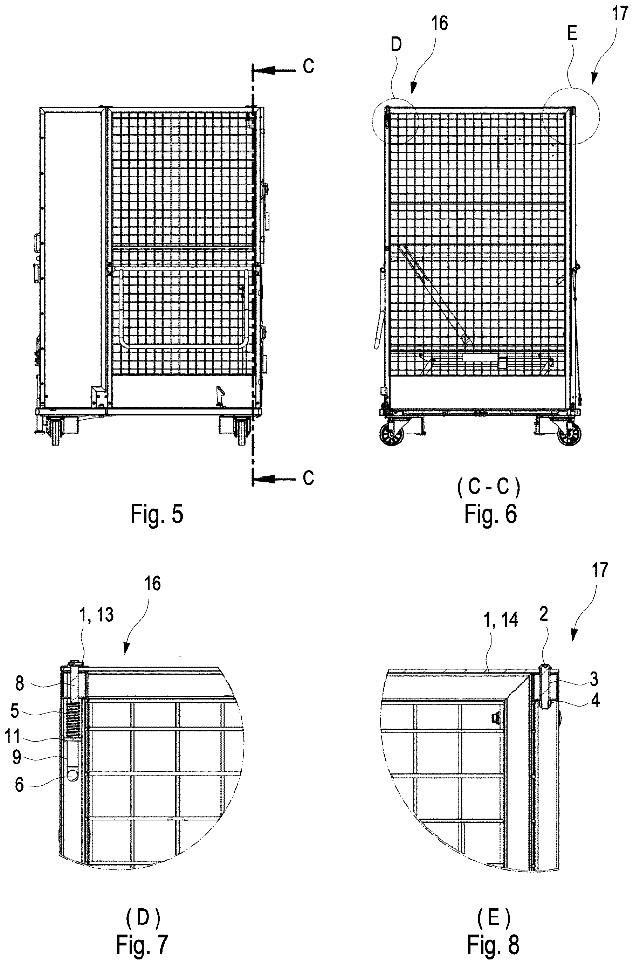

Fig. 5 zeigt den Rollcontainer in einer seitlichen Darstellung.

Fig. 6 zeigt den Rollcontainer in einer vorderen Darstellung mit den oberen Ecken 16 und 17. An diesen Ecken 16 und 17 ist ein Abstandshalter 1 angeordnet.

Fig. 7 zeigt die Ecke 16 des Rollcontainers mit einer Verbindung des Abstandshalters 1 mit einem Bolzen 8, der mit einem Griff 6 nach unten (bezogen auf die Zeichenebene) gezogen werden kann, wodurch die Verbindung mit dem Abstandshalter aufgehoben wird.

Fig. 8 zeigt die Ecke 17 des Rollcontainers mit der Verbindung des Abstandshalters an seinem anderen Ende mit einer Schraube 2, die durch eine Mutter 4 mit dem Rollcontainer zu einer schwenkbaren Verbindung des Abstandshalters mit dem Rollcontainer führt.

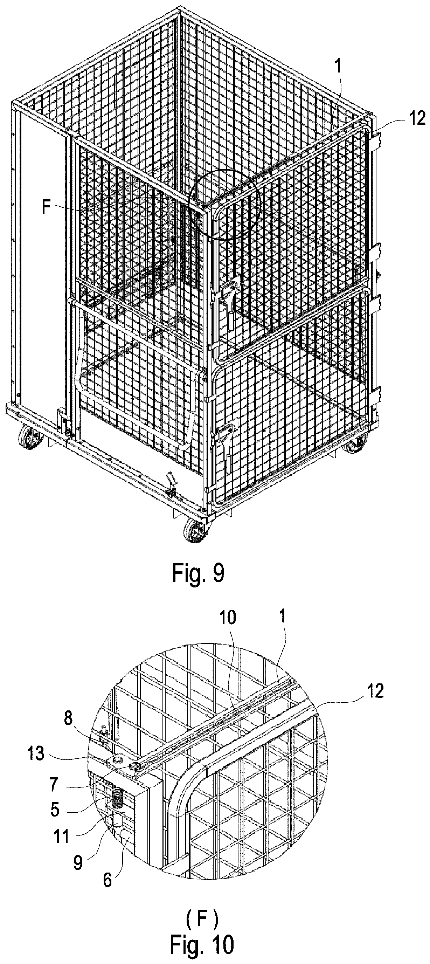

Fig. 9 zeigt einen erfindungsgemäßen Rollcontainer in einer perspektivischen Darstellung mit dem Abstandshalter 1 und einer Seitenwand 12 des Rollcontainers, wobei der Abstandshalter 1 zu der Seitenwand 12 in einer Draufsicht parallel ausgerichtet ist. Der Abstandshalter 1 ist hierbei von der Seitenwand 12 beabstandet, und zwar ist der Abstandshalter 1 nach innen, also zur Mitte des Rollcontainers versetzt, angeordnet.

Fig. 10 zeigt einen Ausschnitt des Rollcontainers der Fig. 9. Dargestellt ist die Seitenwand 12 und der Abstandshalter 1, wobei der Abstandshalter 1 eine Nut 10 aufweist. In dieser Nut 10 kann ein Bolzen 7 des Rollcontainers verfahren werden, sodass zwar eine Verbindung zum Rollcontainer bestehen bleibt, aber wodurch dennoch der Rollcontainer zusammengeklappt werden kann. Außerdem ist der zweite Bolzen 8 dargestellt, der die 2-Punkt-Verbindung zwischen dem Abstandshalter 1 und dem Rollcontainer herstellt. Hierdurch ergibt sich hohe mechanische Steifigkeit zwischen dem Abstandshalter 1 und dem Rollcontainer.

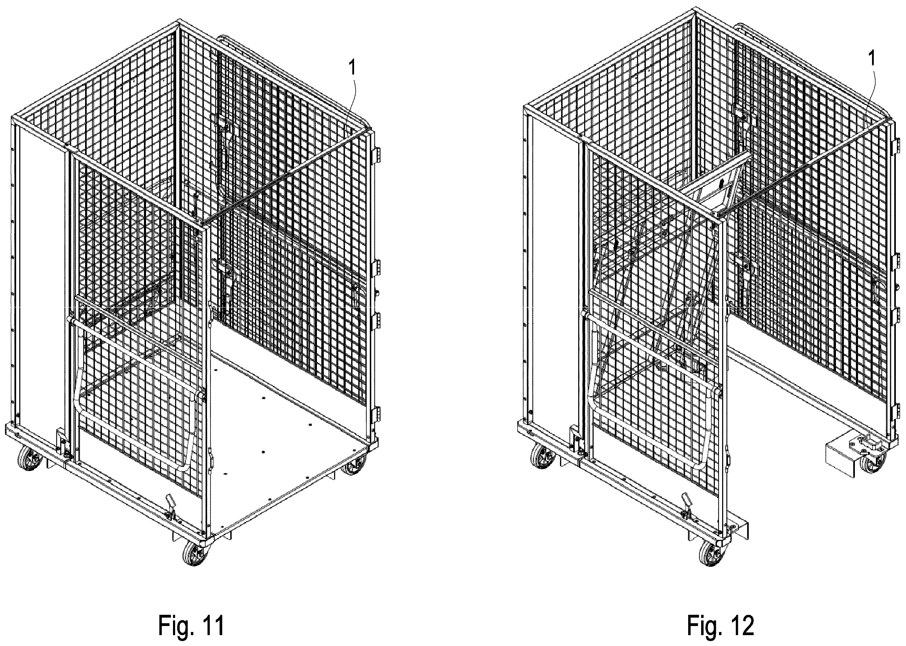

Fig. 11 zeigt den Rollcontainer mit einem geöffneten Seitenwand 12, wobei durch den Abstandshalter 1 die mechanische Stabilität des Rollcontainers gewahrt bleibt.

Fig. 12 zeigt denselben Rollcontainer bei hochgeklapptem Boden, um das Zusammenklappen des kompletten Rollcontainers vorzubereiten.

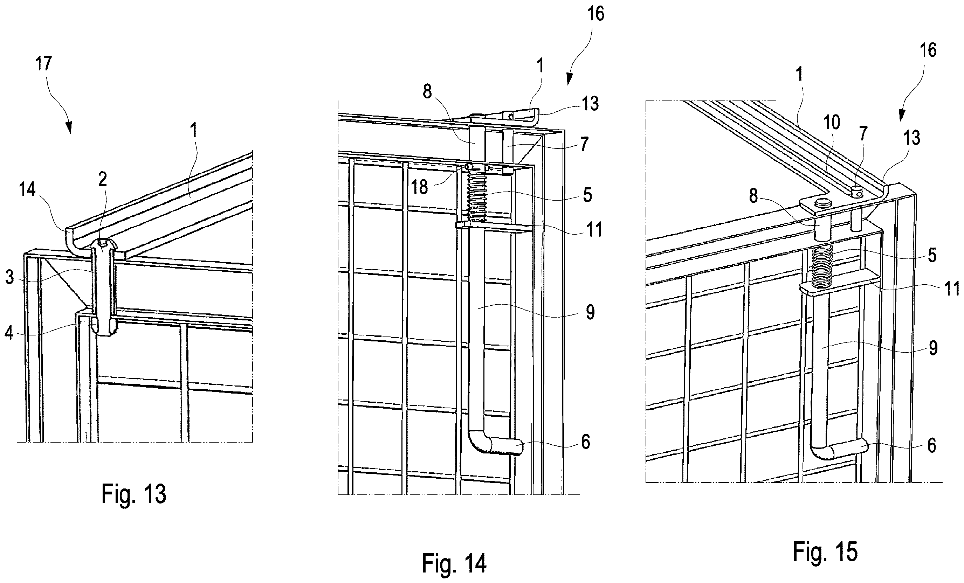

Fig. 13 zeigt einen Ausschnitt mit einer Befestigung des Abstandshalters 1 auf einer Seite, wobei die Befestigung mit einer Schraube 2 erfolgt, die in einer Hülse 3 geführt wird und mit einer Mutter 4 an dem Rollcontainer lösbar oder unlösbar verbunden wird. Der Abstandshalter 1 ist so an einem Ende mit dem Rollcontainer fest verbunden, wobei der Abstandshalter 1 um die Hülse 3 verschwenkt werden kann.

Fig. 14 zeigt die Befestigung des Abstandshalters 1 auf der Gegenseite, also die Verbindung des Abstandshalters 1 mit dem Rollcontainer an dem anderen Ende des Abstandshalters 1. Hierbei werden zwei Bolzen 7 und 8 genutzt, die eine Verbindung zwischen dem Abstandshalter 1 und dem Rollcontainer herstellen. Durch die Anordnung von zwei Verbindungspunkten wird eine Verdrehung bzw. ein Verschwenken des Abstandshalters 1 zum Rollcontainer verhindert, wodurch sich eine hohe mechanische Steifigkeit des Rollcontainers ergibt. Der Bolzen 8 kann durch den Griff 6 nach unten gedrückt werden, wodurch der Bolzen 8 aus dem Abstandshalter 1 herausgelöst wird und die hohe mechanische Steifigkeit aufgehoben wird. Hierdurch wird das Zusammenklappen des Rollcontainers ermöglicht. Eine Feder 5, die als Rückstellfeder wirkt, drückt den Bolzen 8 wieder nach oben, wenn der Griff losgelassen wird. Durch eine Verlängerung 9 kann der Griff 6 relativ weit nach unten (bezogen auf die Zeichenebene) versetzt werden, sodass auch kleine Personen den Griff 6 bedienen können.

Fig. 15 zeigt eine Verbindung der Abstandshalters 1 mit dem Rollcontainer, wobei der Bolzen 8 durch Betätigung mit dem Griff 6 aus dem Abstandshalter 1 herausgefahren werden kann. In diesem Fall kann der Abstandshalter 1 zu dem Rollcontainer verschwenkt werden, wobei der Bolzen 7, der im Rollcontainer verankert ist, in der Nut 10 des Abstandshalters 1 geführt werden kann.

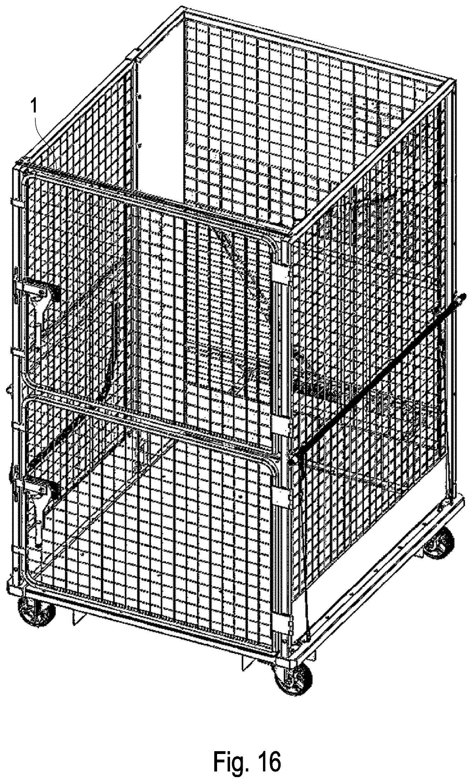

Fig. 16 zeigt den Rollcontainer mit dem Abstandshalter 1.

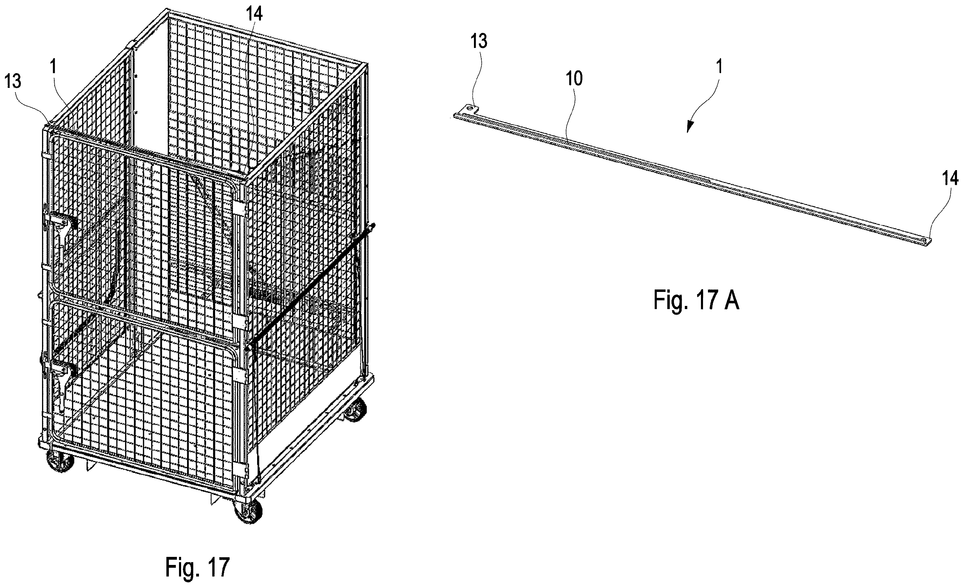

Fig. 17 zeigt den Rollcontainer in einer perspektivischen Darstellung von oben mit dem Abstandshalter 1.

Fig.17A zeigt den Abstandshalter 1 mit der Nut 10, die teilweise über die Länge des Abstandshalters 1 ausgeformt ist. Die Nut 10 muss nicht über die komplette Länge des Abstandshalters 1 ausgeformt sein. Der Abstandshalter 1 weist ein erstes Ende 13 auf, mit dem eine 2-Punkt-Verbindung mit dem Rollcontainer ausgebildet werden kann und ein zweites Ende 14, mit dem eine 1-Punkt-Verbindung mit dem Rollcontainer erzielt werden kann. Der Abstandshalter 1 kann abgekantet sein, also in einem Querschnitt einen Winkelform aufweisen. Hierdurch kann die mechanische Stabilität des Abstandshalters 1 gegenüber beispielsweise Verwindung oder Verbiegen erhöht werden.

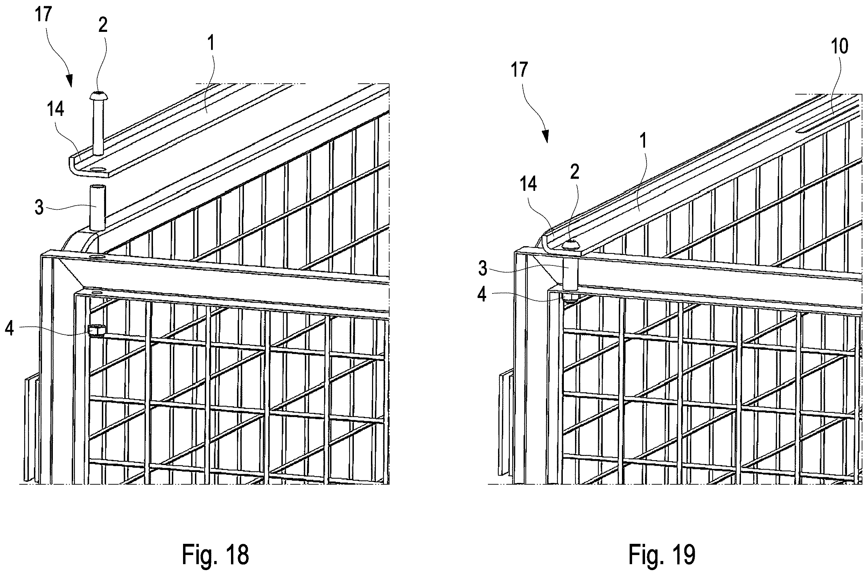

Fig. 18 zeigt eine Verbindung des Abstandshalters 1 mit dem Rollcontainer in einer Explosionsdarstellung mit einer Schraube 2, die in einer Hülse 3 geführt wird und durch eine Mutter 4 zu einer lösbaren Verbindung des Abstandshalters 1 mit dem Rollcontainer führt.

Fig. 19 zeigt die Schraube 2, die zu einer schwenkbaren Verbindung des Abstandshalters 1 mit dem Rollcontainer führt.

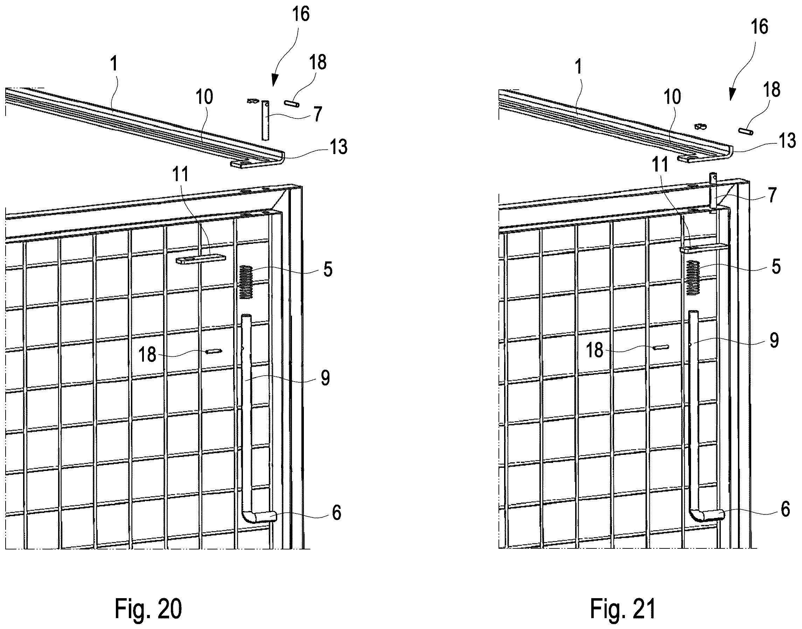

Fig. 20 zeigt in einer Explosionsdarstellung die 2-Punkte-Verbindung mit dem Griff 6, der Verlängerung des Griffs 6, damit der Griff 6 auch für kleine Personen erreichbar ist. Außerdem ist die Feder 5 dargestellt, die eine Rückführung eines herunter gezogenen Bolzens 8 sicherstellt.

Fig. 21 zeigt die Platte 11, auf der die Feder 5 aufsitzt, damit sich eine Rückstellkraft für den Bolzen 8 ergibt.

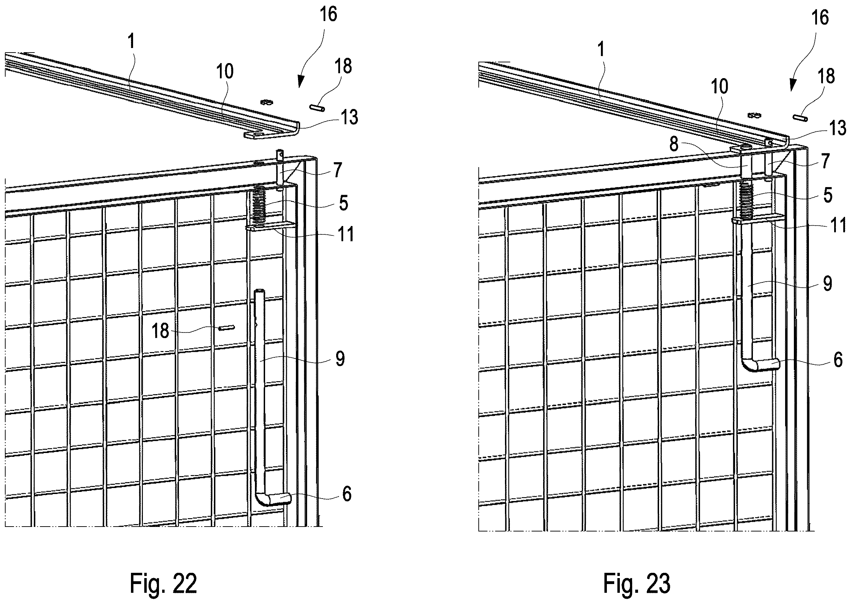

Fig. 22 zeigt die Feder 5, die bei einer Betätigung des Griffs 6 auf der Platte 11 aufsitzt.

Fig. 23 zeigt das komplett montierte Ende 16 des Abstandshalters 1.

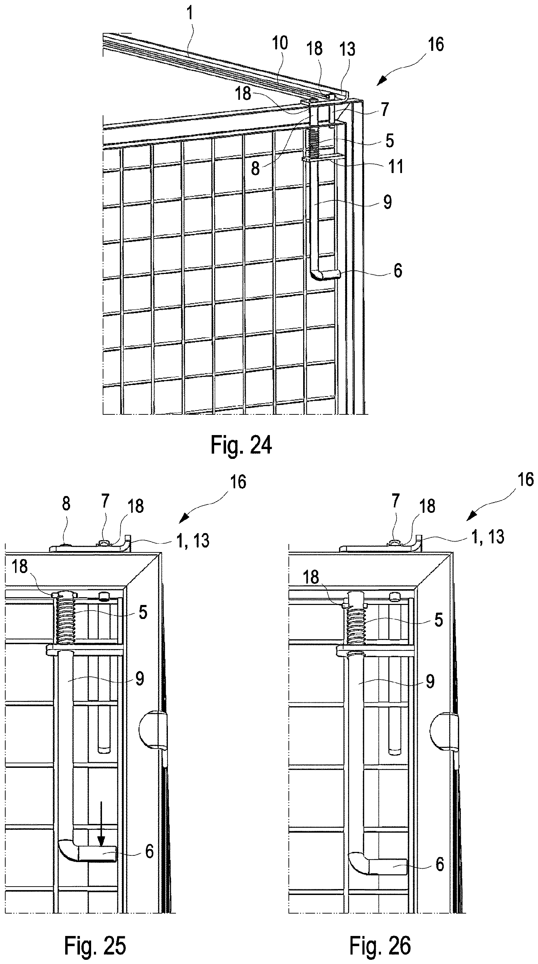

Fig. 24 zeigt einen Sicherungsstift 18, der in dem Bolzen 8 steckt, damit die Feder 5 bei der Betätigung des Griffs 6 zusammengedrückt wird. Außerdem wird ein Sicherungsstift 18 in den Bolzen 7 gesteckt, damit der Bolzen nicht aus dem Abstandshalter 1 fällt.

Fig. 25 zeigt die 2-Punkt-Verbindung, wobei der Griff 6 nicht betätigt ist.

Fig. 26 zeigt die 2-Punkt-Verbindung, wobei der Griff 6 nach unten (bezüglich der Zeichenebene) gezogen ist, wodurch der Bolzen 8 aus dem Abstandshalter 1 gezogen wird. Außerdem wird hierdurch die Feder 5 zusammengedrückt.

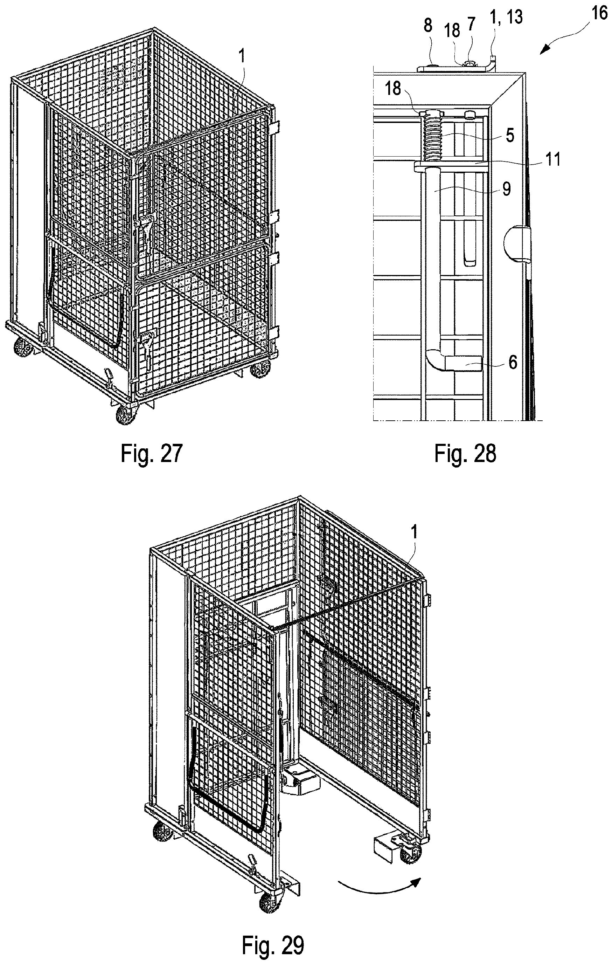

Fig. 27 zeigt einen Rollcontainer mit einem Abstandshalter 1, der parallel zu einer Seitenwand ausgerichtet ist, wobei der Abstandshalter 1 nach innen zur Mitte des Rollcontainers versetzt ist.

Fig. 28 zeigt die komplett montierte 2-Punkt-Verbindung des Abstandshalters 1 mit dem Rollcontainer.

Fig. 29 zeigt den Rollcontainer mit einer geöffneten Seitenwand, wobei durch den Abstandshalter 1 die mechanische Stabilität des Rollcontainers gewahrt bleibt.

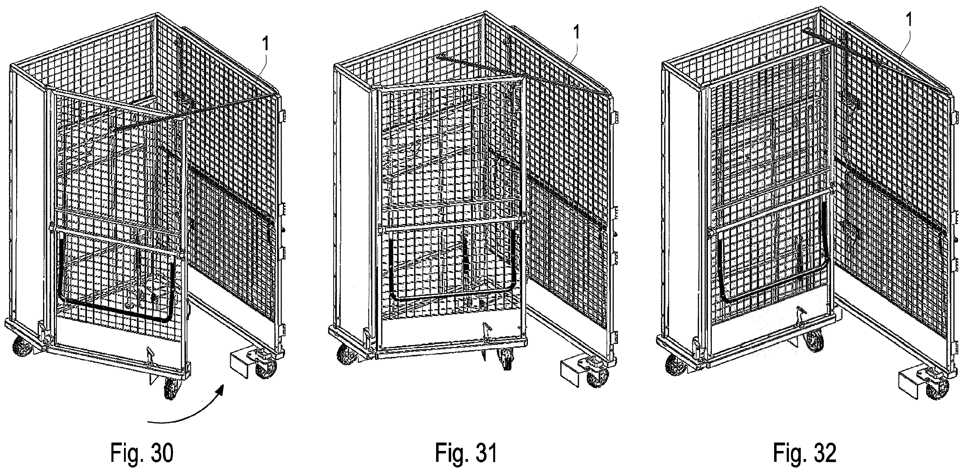

Fig. 30, 31 und 32 zeigen das Zusammenklappen des Rollcontainers. Hierzu wurde zunächst der Griff 6 betätigt und damit der Bolzen 8 aus dem Abstandshalter 1 gelöst. Der Bolzen 7 wird in der Nut 10 des Abstandshalters 1 geführt, wodurch der Abstandshalter 1 zum Rollcontainer verschwenkt werden kann.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Abstandhalter
- 2: Schraube
- 3: Hülse
- 4: Mutter
- 5: Feder
- 6: Griff
- 7: Bolzen
- 8: Bolzen
- 9: Verlängerung
- 10: Langloch/Nut
- 11: Platte, auf der die Feder 5 aufsitzt
- 12: Seitenwand des Rollcontainers
- 13: erstes Ende des Abstandshalters 1
- 14: zweites Ende des Abstandshalters 1
- 15: Platte, auf der die Feder 5 aufsitzt
- 16: erste Ecke des Rollcontainers
- 17: zweite Ecke des Rollcontainers
- 18: Sicherungsstift

## Patentansprüche

1. Rollcontainer zum Aufbewahren und/oder zum Transport von Waren, wobei der Rollcontainer umfasst:
mindestens eine, insbesondere vier, Seitenwände (12), wobei mindestens eine Seitenwand (12) zum Öffnen ausgebildet ist, und
mindestens einen Abstandshalter, wobei der Abstandshalter (1) parallel zu dieser Seitenwand (12) angeordnet ist.

2. Rollcontainer nach Anspruch 1, wobei der Abstandshalter (1) an einem ersten Ende (16) und an einem zweiten Ende (17) mit dem Rollcontainer verbunden ist, wobei das erste Ende eine 2-Punkt-Verbindung mit dem Rollcontainer ist und das zweite Ende (17) eine 1-Punkt-Verbindung oder eine 2-Punkt-Verbindung ist.

3. Rollcontainer nach Anspruch 2, wobei die 2-Punkt-Verbindung durch eine Betätigung eines Griffs (6), wodurch ein Bolzen (8) aus dem Abstandshalter (1) gezogen werden kann, in eine 1-Punkt-Verbindung überführbar ist.

4. Rollcontainer nach Anspruch 3, wobei der Abstandshalter (1) um einen Bolzen (7) der 2-Punkt-Verbindung und um einen Bolzen oder eine Schraube (2) der 1-Punkt-Verbindung schwenkbar ist.

5. Rollcontainer nach einem der Ansprüche 2 bis 4, wobei die 2-Punkt-Verbindung einen Bolzen 7 aufweist, der in einer Nut (10) des Rollcontainers verfahrbar ist.

6. Rollcontainer nach einem der Ansprüche 3 bis 5, wobei der Rollcontainer eine Feder (5) aufweist, die einen durch den Griff (6) gezogenen Bolzen (8) in seine Ausgangslage zurückführen kann.

7. Rollcontainer nach einem der Ansprüche 3 bis 6, wobei der Griff (6) eine Verlängerung (9) aufweist, sodass auch kleine Personen den Griff (6) betätigen können.

8. Rollcontainer nach einem der vorhergehenden Ansprüche, wobei der Abstandshalter (1) in einer Draufsicht parallel zu einer Seitenwand nach innen oder nach außen versetzt angeordnet ist.

9. Rollcontainer nach einem der vorhergehenden Ansprüche, wobei der Abstandshalter (1) in einem Querschnitt einen Winkel aufweist, um die mechanische Stabilität des Abstandshalters (1) zu erhöhen.
